# EUROPÄISCHE PATENTSCHRIFT

(11) **EP 1 751 588 B1**
(45) Veröffentlichungstag und Bekanntmachung des Hinweises auf die Patenterteilung: **25.09.2013**
(21) Anmeldenummer: 05747655.8
(22) Anmeldetag: 12.05.2005
(51) Int. Cl.: G02B 5/08, B60R 1/08

(54) **BLENDARMER RÜCKBLICKSPIEGEL FÜR FAHRZEUGE**
LOW GLARE REAR-VIEW MIRROR FOR VEHICLES
RETROVISEUR ANTI-EBLOUISSEMENT POUR VEHICULES

(30) Priorität: 12.05.2004 DE 102004023932
(43) Veröffentlichungstag der Anmeldung: 14.02.2007
(73) Patentinhaber: FLABEG Deutschland GmbH, 90441 Nürnberg (DE)
(72) Erfinder: WITTKOPF, Hartmut, 45896 Gelsenkirchen (DE); HÖING, Thomas, 93426 Roding (DE)
(74) Vertreter: Tergau & Walkenhorst
(86) Internationale Anmeldenummer: PCT/EP2005/005168
(87) Internationale Veröffentlichungsnummer: WO 2005/111672

(56) Entgegenhaltungen:
- EP-A- 0 176 935
- EP-A- 0 438 646
- US-A- 5 159 490
- PATENT ABSTRACTS OF JAPAN Bd. 011, Nr. 324 (P-628), 22. Oktober 1987 (1987-10-22) & JP 62 108207 A (TOKAI RIKA CO LTD), 19. Mai 1987 (1987-05-19)
- PATENT ABSTRACTS OF JAPAN Bd. 009, Nr. 133 (P-362), 8. Juni 1985 (1985-06-08) & JP 60 015604 A (NIPPON JIDOSHA BUHIN SOGO KENKYUSHO KK), 26. Januar 1985 (1985-01-26)
- PATENT ABSTRACTS OF JAPAN Bd. 014, Nr. 449 (P-1111), 26. September 1990 (1990-09-26) & JP 02 178603 A (TOKAI RIKA CO LTD), 11. Juli 1990 (1990-07-11)
- PATENT ABSTRACTS OF JAPAN Bd. 010, Nr. 074 (P-439), 25. März 1986 (1986-03-25) & JP 60 212704 A (MURAKAMI KAIMEIDOU:KK), 25. Oktober 1985 (1985-10-25)

## Beschreibung

Die Erfindung betrifft einen Rückblickspiegel für Fahrzeug, insbesondere für Kraftfahrzeuge oder dergleichen, mit einem transparenten Schichtträger, vorzugsweise aus Kalknatronglas bestehend, und einer Beschichtung auf der Vorder- und/oder Rückseite aus dielektrischen und metallischen Materialien, wobei der Spiegel aufgrund seines Reflexionsgrades, insbesondere bei Nacht, blendarm ist.

Typische bekannte Beschichtungen für Autospiegel bestehen aus den hochreflektierenden Metallen Silber und Aluminium. Die erreichbaren Reflexionswerte betragen im sichtbaren Bereich mehr als 85 %. Obschon jedoch hohe Reflexionswerte bei Tag erwünscht sind, führen sie aber bei Nachtfahrten zur Blendung des Fahrers durch die Scheinwerfer nachfolgender Fahrzeuge. In der Vergangenheit wurden daher Spiegelbeschichtungen entwickelt, die die Blendung bei Nachtfahrten reduzieren sollen.

Eine Möglichkeit der Blendreduzierung besteht in der Verwendung alternativer Reflektormaterialien wie Chrom oder Titanchrom (Doppelschichtsystem Chrom auf Titan, siehe DE 197 390 46) . Damit sind Spiegel mit neutraler Reflexion und einem reduzierten Reflexionsgrad von ca. 45 % bis 60 % erreichbar. Eine weitere Reduzierung verbietet sich derzeit aufgrund gesetzlicher Vorschriften, die am Tag eine Mindestreflexion von 40 % fordern.

Man versuchte in der Folge, durch spektral selektive Reflexionsbeschichtungen das Verhalten der Spiegel zu verbessern. So beschreibt die EP 0 176 935 B1 einen blauen Rückspiegel mit erniedrigter Reflexion im grünen bis roten Spektralbereich. Dem liegt die Annahme zugrunde, dass solche Spiegel insofern bei Nachtfahrten blendarm sind, als die spektrale Zusammensetzung des Lichts der zum Zeitpunkt der Anmeldung der EP 0 176 935 B1 üblichen Scheinwerfer einen hohen Rot- und einen geringen Blauanteil aufwiesen, so dass solche blauen Spiegel das (Blend-)Licht dieser Scheinwerfer zusätzlich abschwächten.

Zur Bewertung der Spiegelbeschichtungen hinsichtlich ihrer spektralen Eigenschaften ist im allgemeinen zu berücksichtigen, dass das menschliche Auge innerhalb des sichtbaren Spektralbereichs höchst unterschiedlich empfindlich ist. Dies wird durch die sogenannte Empfindlichkeitskurve V(k) dargestellt, wobei die Wellenlänge des Lichts bezeichnet. V(X) ist jedoch nur für die Helladaption des Auges gültig. Bei sinkender Umgebungshelligkeit verschiebt sich diese Kurve hin zu kürzeren Wellenlängen bis hin zur dunkeladaptierten Empfindlichkeitskurve V'(Ä).

Ein weiterer Ansatz zur Entwicklung blendarmer Spiegel waren daher Spiegel, die bei relativ hohem spektralen Reflexionsniveau insbesondere den Bereich der höchsten Augenempfindlichkeit bei Wellenlängen um 550 nm abschwächten (US 4921331, US4805989 und US 4955705).

Mit einer alternativen Technologie, die hier erwähnt werden soll, versuchte man, die Blendgefahr durch Scheinwerfer nachfolgender Fahrzeuge dadurch zu verringern, dass der Spiegelaufbau Teile variabler Transmission enthält, die z.B. elektrisch geschaltet werden (z.B. elektrochrome Spiegel oder LCD-Spiegel). Die erwähnten Technologien sind jedoch mit hohem Aufwand verbunden. Insbesondere erfordern sie schaltungstechnische Maßnahmen, damit die mit ihnen erzielbaren niedrigen Reflexionswerte nur im konkreten Fall akuter Blendung wirksam sind. Entsprechend sind derzeit nur Fahrzeuge aus dem oberen Segment damit ausgerüstet.

Eine weitere wichtige Größe für die Bewertung ist der sog. Farbwiedergabeindex Rₐ in Anlehnung an DIN EN 410, der ein Maß dafür ist, wie Farben im reflektierten Spiegelbild wiedergegeben bzw. unterschieden werden können. Der Farbwiedergabeindex ist insbesondere bei der visuellen Erfassung des Verkehrsgeschehens relevant. Kurz erläutert, haben Systeme mit neutraler Reflexion eine gute Farbwiedergabe (Rₐ nahezu 100), während der Farbwiedergabeindex bei stark eingefärbten Spiegeln deutlich reduziert ist. Dies stellt in der Praxis eine Begrenzung der Beeinflussung des Blendverhaltens durch das Spiegelspektrum dar.

Weiter erschwert wird optimale Blendminderung durch die Tatsache, dass mittlerweile weitere Lichtquellen zum Einsatz im KfZ-Scheinwerfer entwickelt wurden, die sich spektral deutlich von den bekannten Lichtquellen (Halogenscheinwerfer) unterscheiden und die Zusammenhänge verkomplizieren.

Aufgabe der vorliegenden Erfindung ist daher ein verbesserter Rückspiegel mit deutlicher Verringerung der Blendwirkung nachfolgender Fahrzeuge (mit unterschiedlichen Scheinwerferaufbauten), insbesondere bei Dunkelheit, und einem Farbwiedergabeindex Rₐ mindestens in der Größenordnung wie der der bekannten Blautonspiegel (Rₐ = 74).

Erfindungsgemäß wird diese Aufgabe durch die Merkmale des Ansprüchs 1 gelöst.

Insbesonders befindet sich die Beschichtung auf der dem Betrachter abgewandten Seite des Schichtträgers. Sie umfasst die Beschichtung, in der Reihenfolge ihrer Abscheidung, eine transparente Metallschicht, eine dielektrische Schicht und eine metallische Reflektorschicht. Die transparente Metallschicht besteht dabei vorzugsweise aus NiCr und weist eine Dicke von 1 bis 21 nm auf. Die dielektrische Schicht besteht vorzugsweise aus TiO₂, SiO₂ oder SnO₂.

Werevorteilhafte Ausgestaltungen der Erfindung sind ebenfalls Gegenstand der Unteransprüche.

Besonders gute Ergebnisse sind erreichbar, indem der Rückspiegel hinsichtlich seiner optischen Eigenschaften besonders auf eine sogenannte Designwellenlänge hin ausgelegt ist, die in besonderem Maße an die Empfindlichkeitskurve des Auges sowohl bei Tages- als auch bei Nachtsehen angepaßt ist. Als besonders geeignete Designwellenlänge ist dabei eine Wellenlänge von etwa 530 nm gewählt, die einem Zwischenwert zwischen den Maxima der Empfindlichkeitskurve für Tagessehen einerseits und Nachtsehen andererseits entspricht. Um eine besonders geeignete Anpassung des Schichtsystems an diese Designwellenlänge zu gewährleisten, sind vorzugsweise die Schichtdicken, insbesondere die so genannte optische Schichtdicke, also das Produkt aus tatsächlicher Schichtdicke und Brechzahl, der dielektrischen Schicht geeignet gewählt. Vorzugsweise ist die optische Dicke do der dieelektrischen Schicht in Abhängigkeit von deren Brechzahl n530 bei der Designwellenlänge von 530 nm derart gewählt, dass sie in einem als besonders geeignet erachteten Bereich liegt. Dieser ist für eine Brechzahl n530 von höchstens 1,99 als untere Grenze durch die im (n530, do)-Raum gegebene, durch die Punkte (n530 = 1,46, do = 235 nm) und (n530 = 1,99, do = 216 nm) verlaufende Gerade, bevorzugt durch die im (n530, do)-Raum gegebene, durch die Punkte (n530 = 1,46, do = 244 nm) und (n530 = 1,99, do = 233 nm) verlaufende Gerade, und als obere Grenze durch die im (n530, do)-Raum gegebene, durch die Punkte (n530 = 1,46, do = 362 nm) und (n530 = 1,99, do = 353 nm) verlaufende Gerade, bevorzugt durch die im (n530, do)-Raum gegebene, durch die Punkte (n530 = 1,46, do = 335 nm) und (n530 = 1,99, do = 330 nm) verlaufende Gerade, begrenzt. Für eine Brechzahl n530 von mindestens 1,99 ist der als bevorzugt erachtete Bereich hingegen als untere Grenze durch die im (n530, do)-Raum gegebene, durch die Punkte (n530 = 1,99, do = 216 nm) und (n530 = 2,48, do = 205 nm) verlaufende Gerade, bevorzugt durch die im (n530, do)-Raum gegebene, durch die Punkte (n530 = 1,99, do = 233 nm) und (n530 = 2,48, do = 225 nm) verlaufende Gerade, und als obere Grenze durch die im (n530, do)-Raum gegebene, durch die Punkte (n530 = 1,99, do = 353 nm) und (n530 = 2,48, do = 340 nm) verlaufende Gerade, bevorzugt durch die im (n530, do)-Raum gegebene, durch die Punkte (n530 = 1,99, do = 330 nm) und (n530 = 2,48, do = 319 nm) verlaufende Gerade, begrenzt.

Durch diese Parameterwahl ist sichergestellt, dass die dieelektrische Schicht eine optische Dicke von 235 nm bis 362 nm, vorzugsweise von 244 bis 335 nm, hat, wenn ihre Brechzahl bei 530 nm 1,46 beträgt. Hingegen hat die dielektrische Schicht eine optische Dicke von 216 nm bis 353 nm, vorzugsweise von 233 bis 330 nm, wenn ihre Brechzahl bei 530 nm 1,99 beträgt, und eine optische Dicke von 205 nm bis 340 nm, vorzugsweise von 225 bis 319 nm, wenn ihre Brechzahl bei 530 nm 2,48 beträgt. Im Zwischenbereich zwischen diesen Brechzahlen hat die dielektrische Schicht eine optische Dicke in einem Bereich, der sich durch lineare Interpolation aufgrund ihrer im Intervall 1,46 bis 1,99 oder im Intervall 1,99 bis 2,48 liegenden Brechzahl bei 530 nm ergibt.

In herkömmlichen Rückspiegeln kommt üblicherweise Silber (Ag) als Reflektormaterial zum Einsatz. Dabei sind jedoch üblicherweise aufwendige Korrosionsschutzmaßnahmen, wie beispielsweise das Aufbringen von Schutzlack oder dergleichen, notwendig, um unter allen Einsatzbedingungen eine zuverlässige Reflexionswirkung zu garantieren. Einerseits aus Kostengründen und andererseits aus Umweltschutzgründen, insbesondere im Hinblick auf die in derartigen Schutzlakken eingesetzten Materialien, ist es daher wünschenswert, alternative Materialien für die Reflektorschicht bereitzustellen. Dies ist aber im Hinblick auf die auslegungsgemäß vorgesehenen optischen Eigenschaften, insbesondere zur Sicherstellung der geforderten Reflexionswerfe, nicht ohne weiteres möglich. Wie sich überraschenderweise herausgestellt hat, sind diese Auslegungsziele, also Einhaltung besonders günstiger optischer Eigenschaften bei Verwendung alternativer Reflektormaterialien, aber erreichbar, indem in besonders vorteilhafter Ausgestaltung zwischen der ohnehin vorgesehenen dielektrischen Schicht und der Reflektorschicht eine weitere dielektrische Schicht in der Art einer Zusatzschicht angeordnet ist. Diese weist in weiterer vorteilhafter Ausgestaltung eine im Vergleich zur dielektrischen Schicht verringerte Brechzahl auf. Vorteilhafterweise besteht die dielektrische Zusatzschicht aus SiO₂ oder MgF₂, oder bei ausreichend hoch brechender dielektrischer Schicht aus SnO₂.

Vorzugsweise ist auch bei diesem Mehrschichtsystem der charakteristische Parametersatz, also die Kombination der Schichtdicken, derart geeignet gewählt, dass eine Anpassung an eine Designwellenlänge, vorzugsweise von etwa 530 nm erfolgt. Dies ist dadurch erreichbar, dass die Summe der optischen Schichtdicken der dielektrischen Schicht und der Zusatzschicht mindestens 250 nm, vorzugsweise mindestens 275 nm, und höchstens 390 nm, vorzugsweise höchstens 375 nm, beträgt. Damit liegt die insgesamt durch die dielektrische Doppelschicht gegebene optische Schichtdicke in einem Band einer gewissen Bandbreite oberhalb und um die halbe Designwellenlänge. In alternativer vorteilhafter Ausgestaltung beträgt die Summe der optischen Schichtdicken der dielektrischen Schicht und der Zusatzschicht mindestens 530 nm, vorzugsweise mindestens 560 nm, und höchstens 670 nm, vorzugsweise höchstens 635 nm.

Der mehrschichtige Aufbau des Dielektrikums ermöglicht die Verwendung alternativer Reflektormaterialien. Vorteilhafterweise besteht dabei die Reflektorschicht aus Aluminium (Al), Nickel (Ni), Titan (Ti), Chrom (Cr) oder einer Legierung aus diesen Materialien, vorzugsweise aber aus Cr.

Die Beschichtung ist rückseitig auf dem Schichtträger aufgebracht, so dass sie durch den Schichtträger vor Beschädigungen oder sonstigen schädlichen Auswirkungen von außen geschützt ist. In weiterer vorteilhafter Ausgestaltung ist der Schichtträger dabei vorderseitig mit einer hydrophilen und/oder photokatalytisch aktiven Beschichtung versehen, die in an sich bekannter Weise ein unerwünschtes Beschlagen verhindert.

Die Erfindung wird durch die folgenden Zeichnungen veranschaulicht.

Es zeigen
Fig. 1 den spektralen Verlauf einer Halogenlampe (Lichtart A), von Tageslicht (Lichtart C), einer Hochdruckentladungslampe und einer weißen LED
Fig. 2 die photopische und skotopische Augenempfindlichkeitskurve
Fig. 3 die Reflexionskurven bekannter Blauton- bzw. Neutraltonspiegel,
Fig. 4 und Fig. 5 die Reflexionskurven bekannter Farbspiegel (US4955705 und W00241049),
Fig. 6 den Schichtaufbau des Farbspiegels gemäß den Ausführungsbeispielen,
Fig. 7 bis Fig. 10 die Reflexionskurven von Ausführungsbeispielen gemäß der Erfindung.

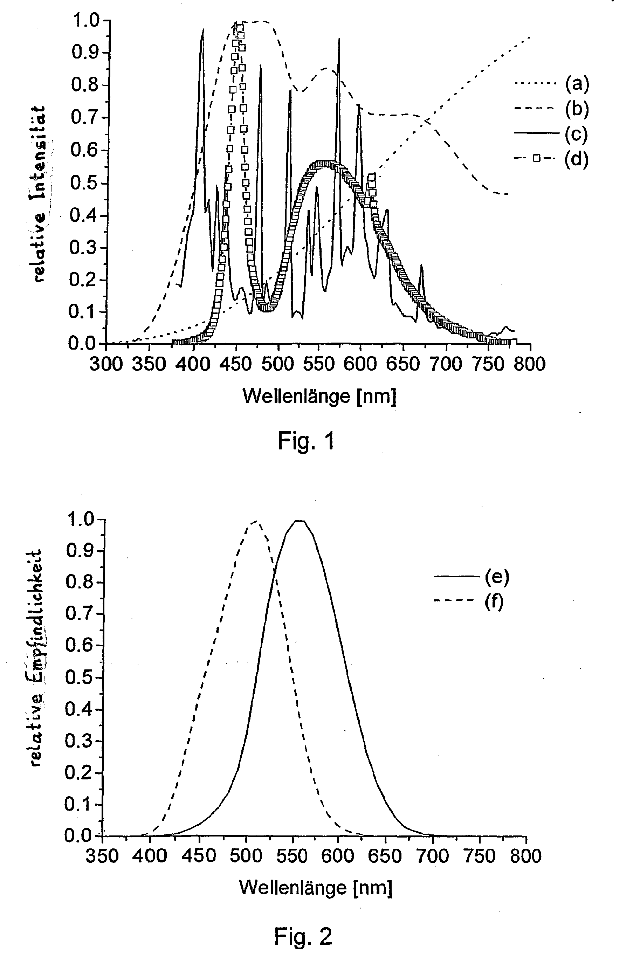

In Fig. 1 ist dargestellt, wie sich die Spektren verschiedener Lichtquellen in der Vergangenheit entwickelt haben. Während bis vor Kurzem nur die Lichtarten C (tagsüber) und A (nachts) relevant waren, sind durch die Entwicklung neuer Lichtquellen (Entladungslampe HID und weiße Leuchtdioden LED) die spektralen Verhältnisse bei Nachtfahrten komplexer geworden. In der Fig. 1 sind die Spektren bezeichnet mit (a) Lichtart A, (b) Lichtart C, (c) Entladungslampe und (d) weiße Leuchtdiode.

Die Fig. 2 veranschaulicht, dass das menschliche Auge zunächst nur in einem engen Bereich hochempfindlich ist und dieser damit bei Untersuchungen zur Blendung in der Hauptsache relevant ist. Es ist außerdem erkennbar, dass sich die Empfindlichkeitskurve bei skotopischem Sehen (nachts) zu kürzeren Wellenlängen verschiebt. Die Empfindlichkeitskurven (e) "photopisches Sehen" und (f) "skotopisches Sehen" entsprechen der CIE 1951.

In Tabelle 1 sind bekannte Spiegelsysteme und Systeme gemäß der vorliegenden Erfindung hinsichtlich charakteristischer optischer Daten dargestellt.

**Tabelle 1**

| | Absorber | | Schichtsystem Int.-Schicht | | | Zus.-Schicht | | | Photopisch Reflexion | | | | Skotopisch Reflexion | | | | | |
|---|---|---|---|---|---|---|---|---|---|---|---|---|---|---|---|---|---|---|
| Variante/l | | ds | | ds | Do | | ds | do | A | C | LED | HID | A | C | LED | HID | Ra | M* |
| Reflektormaterial | Mat. | [nm] | Mat. | [nm] | [nm] | Mat | [nm] | [nm] | [%] | [%] | [%] | [%] | [%] | [%] | [%] | [%] | [%] | [%] |
| Chrom 2 | - | - | - | - | - | | | | 57 | 57 | 57 | 57 | 58 | 58 | 58 | 58 | 97 | 102 |
| Titan-Chrom 2 | - | - | - | - | - | | | | 46 | 46 | 46 | 46 | 45 | 45 | 45 | 45 | 99 | 98 |
| TEREF | NiCr | 3,4 | SnO2 | 82 | 164 | | | | 49 | 53 | 52 | 51 | 64 | 68 | 66 | 66 | 74 | 130 |
| Beispiel 1/Ag | NiCr | 3,2 | SiO2 | 248 | 362 | | | | 40 | 37 | 37 | 38 | 34 | 36 | 37 | 37 | 75 | 97 |
| Beispiel 2/Ag | NiCr | 2.8 | SiO2 | 240 | 351 | | | | 47 | 44 | 44 | 45 | 38 | 39 | 40 | 40 | 75 | 88 |
| Beispiel 3/Ag | NiCr | 2,4 | SiO2 | 226 | 330 | | | | 59 | 55 | 55 | 56 | 46 | 44 | 45 | 45 | 75 | 80 |
| Beispiel 4/Ag | NiCr | 3,15 | SiO2 | 197 | 288 | | | | 74 | 70 | 71 | 72 | 55 | 49 | 52 | 51 | 75 | 74 |
| Beispiel 5/Ag | NiCr | 10,6 | SiO2 | 172 | 251 | | | | 76 | 73 | 77 | 77 | 58 | 49 | 54 | 52 | 79 | 76 |
| Beispiel 6/Ag | NiCr | 13,6 | SiO2 | 165 | 240 | | | | 73 | 73 | 76 | 75 | 63 | 54 | 58 | 57 | 75 | 86 |
| Beispiel 7/Ag | NiCr | 9,2 | SiO2 | 161 | 235 | | | | 74 | 76 | 79 | 77 | 72 | 65 | 68 | 67 | 75 | 97 |
| Beispiel 8/Ag | NiCr | 2,3 | SnO2 | 177 | 353 | | | | 51 | 48 | 48 | 49 | 44 | 46 | 47 | 46 | 76 | 97 |
| Beispiel 9/Ag | NiCr | 2 | SnO2 | 169 | 337 | | | | 59 | 55 | 56 | 57 | 47 | 47 | 49 | 48 | 76 | 85 |
| Beispiel 10/Ag | NiCr | 1,9 | Sn02 | 161 | 321 | | | | 66 | 62 | 63 | 64 | 51 | 48 | 51 | 50 | 76 | 77 |
| Beispiel 11/Ag | NiCr | 3,3 | SnO2 | 140 | 279 | | | | 77 | 72 | 74 | 75 | 57 | 49 | 53 | 52 | 75 | 74 |
| Beispiel 12/Ag | NiCr | 14 | SnO2 | 119 | 237 | | | | 76 | 74 | 77 | 77 | 60 | 52 | 55 | 54 | 81 | 79 |
| Beispiel 13/Ag | NiCr | 16 | SnO2 | 114 | 227 | | | | 74 | 73 | 77 | 76 | 64 | 56 | 60 | 58 | 79 | 86 |
| Beispiel 14/Ag | NiCr | 14,9 | SnO2 | 110 | 219 | | | | 72 | 74 | 76 | 74 | 70 | 63 | 65 | 64 | 75 | 97 |
| Beispiel 15/Ag | NiCr | 2,4 | TiO2 | 137 | 340 | | | | 55 | 52 | 52 | 53 | 46 | 50 | 51 | 50 | 75 | 97 |
| Beispiel 16/Ag | NiCr | 2,2 | TiO2 | 131 | 325 | | | | 63 | 59 | 60 | 61 | 49 | 49 | 53 | 50 | 76 | 84 |
| Beispiel 17/Ag | NiCr | 2,15 | TiO2 | 124 | 307 | | | | 71 | 66 | 68 | 69 | 53 | 50 | 55 | 52 | 76 | 76 |
| Beispiel 18/Ag | NiCr | 4,3 | TiO2 | 108 | 268 | | | | 80 | 75 | 77 | 78 | 59 | 50 | 54 | 53 | 75 | 74 |
| Beispiel 19/Ag | NiCr | 14,6 | TiO2 | 92 | 228 | | | | 79 | 76 | 79 | 79 | 63 | 55 | 59 | 57 | 82 | 80 |
| Beispiel 20/Ag | NiCr | 15,9 | TiO2 | 84 | 208 | | | | 75 | 77 | 79 | 77 | 73 | 66 | 68 | 67 | 79 | 97 |
| Beispiel 21/Ag | NiCr | 1,2 | SnO2 | 177 | 353 | | | | 64 | 62 | 62 | 63 | 58 | 59 | 60 | 59 | 86 | 96 |
| Beispiel 22/Ag | NiCr | 1,1 | SnO2 | 170 | 339 | | | | 69 | 66 | 67 | 67 | 59 | 59 | 61 | 60 | 85 | 89 |
| Beispiel 23/Ag | NiCr | 1 | SnO2 | 165 | 329 | | | | 73 | 70 | 71 | 71 | 62 | 60 | 62 | 61 | 85 | 86 |
| Beispiel 24/Ag | NiCr | 1,35 | SnO2 | 143 | 284 | | | | 82 | 79 | 80 | 81 | 68 | 63 | 65 | 65 | 85 | 84 |
| Beispiel 25l/g | NiCr | 4 | SnO2 | 125 | 249 | | | | 84 | 82 | 84 | 84 | 71 | 64 | 66 | 65 | 85 | 85 |
| Beispiel 26/Ag | NiCr | 6 | SnO2 | 113 | 225 | | | | 80 | 81 | 83 | 82 | 78 | 72 | 74 | 73 | 85 | 97 |
| Ag | NiCr | 20,8 | SnO2 | 109 | 216 | - | 0 | 0 | 69 | 70 | 73 | 72 | 66 | 60 | 63 | 62 | 72 | 97 |
| Ag | NiCr | 20,8 | SnO2 | 117 | 233 | - | 0 | 0 | 72 | 69 | 72 | 73 | 57 | 51 | 54 | 53 | 85 | 80 |
| Ag | NiCr | 20,9 | SnO2 | 109 | 216 | - | 0 | 0 | 68 | 70 | 73 | 72 | 66 | 60 | 63 | 62 | 72 | 97 |
| Ag | NiCr | 2,6 | SnO2 | 174 | 347 | - | 0 | 0 | 48 | 44 | 44 | 45 | 39 | 42 | 44 | 42 | 71 | 96 |
| Ag | NiCr | 19,8 | SiO2 | 161 | 235 | - | 0 | 0 | 68 | 69 | 72 | 71 | 61 | 55 | 58 | 57 | 70 | 91 |
| Ag | NiCr | 3,3 | SiO2 | 246 | 359 | - | 0 | 0 | 38 | 35 | 35 | 36 | 32 | 34 | 35 | 34 | 71 | 96 |
| Ag | NiCr | 19,5 | SiO2 | 167 | 244 | - | 0 | 0 | 70 | 68 | 71 | 72 | 56 | 49 | 53 | 52 | 80 | 80 |
| Ag | NiCr | 2,8 | SiO2 | 230 | 335 | - | 0 | 0 | 51 | 47 | 48 | 49 | 39 | 38 | 39 | 39 | 70 | 80 |
| Ag | NiCr | 20,5 | Ti02 | 83 | 205 | - | 0 | 0 | 73 | 74 | 77 | 76 | 70 | 64 | 67 | 66 | 75 | 97 |
| Ag | NiCr | 2,6 | Ti02 | 135 | 335 | - | 0 | 0 | 54 | 50 | 50 | 51 | 44 | 48 | 50 | 48 | 72 | 97 |
| Ag | NiCr | 20,5 | TiO2 | 91 | 225 | - | 0 | 0 | 75 | 72 | 75 | 75 | 60 | 54 | 57 | 56 | 85 | 80 |
| Ag | NiCr | 2,7 | TiO2 | 129 | 319 | - | 0 | 0 | 61 | 56 | 57 | 58 | 44 | 45 | 49 | 46 | 71 | 80 |
| Cr | NiCr | 3,0 | SnO2 | 76 | 150,91 | SiO2 | 84 | 123,15 | 70 | 69 | 70 | 70 | 65 | 62 | 62 | 62 | 92 | 94 |
| Cr | NiCr | 4,0 | SnO2 | 87 | 172,47 | SiO2 | 75 | 109,47 | 68 | 66 | 67 | 67 | 58 | 54 | 55 | 55 | 87 | 87 |
| Cr (SnO2 2. | NiCr | 2,0 | SnO2 | 184 | SiO2 | 366,49 | 159 | 232,64 | 50 | 46 | 49 | 49 | 35 | 33 | 39 | 35 | 77 | 71 |
| Cr (SnO2 2. | NiCr | 3,0 | SnO2 | 206 | 409,61 | SiO2 | 131 | 191,58 | 55 | 50 | 53 | 54 | 35 | 31 | 38 | 34 | 71 | 65 |
| Cr (SnO2 2. | NiCr | 12.0 | SnO2 | 195 | 388,05 | SiO2 | 141 | 205,26 | 50 | 46 | 50 | 50 | 31 | 27 | 32 | 30 | 70 | 62 |
| Cr | NiCr | 17,0 | Sn02 | 54 | 107,79 | Si02 | 112 | 164,21 | 65 | 64 | 66 | 66 | 57 | 52 | 54 | 54 | 88 | 88 |
| Cr | NiCr | 2,0 | Sn02 | 108 | 216 | SiO2 | 94 | 137 | 49 | 46 | 46 | 47 | 36 | 34 | 36 | 35 | 74 | 75 |
| Cr | NiCr | 1,0 | SnO2 | 87 | 172 | Si02 | 131 | 192 | 50 | 47 | 48 | 49 | 39 | 37 | 39 | 38 | 77 | 79 |
| US4955705 Fig. | | | | | | | | | 54 | 54 | 53 | 53 | 56 | 59 | 58 | 58 | 91 | 109 |
| US4955705 Fig. | | | | | | | | | 46 | 46 | 45 | 46 | 51 | 55 | 53 | 54 | 88 | 119 |
| US4955705 Fig. | | | | | | | | | 49 | 48 | 46 | 47 | 50 | 54 | 53 | 53 | 77 | 114 |
| US4955705 Fig. | | | | | | | | | 40 | 40 | 39 | 40 | 45 | 50 | 48 | 48 | 83 | 123 |
| US4955705 Fig. | | | | | | | | | 38 | 37 | 36 | 37 | 39 | 44 | 42 | 43 | 74 | 119 |
| W00241049 Fig. 5 | | | | | | | | | 50 | 44 | 46 | 48 | 30 | 28 | 31 | 30 | 65 | 64 |
| W00241049 Fig.7 | | | | | | | | | 33 | 30 | 31 | 32 | 21 | 22 | 23 | 23 | 65 | 73 |
| W00241049 Fig.10 | | | | | | | | | 43 | 40 | 40 | 42 | 36 | 40 | 40 | 39 | 78 | 100 |

Die dort verwendeten Begriffe sollen zunächst erläutert werden. Bei den zum Stand der Technik zu rechnenden Ausführungen "Chrom 2", "Titan-Chrom 2" und "TEREF" handelt es sich um Spiegel mit der Beschichtung auf der dem Betrachter abgewandten Seite des Substrats, wobei "Chrom 2" ein gewöhnlicher Chromspiegel ist, während "Titan-Chrom 2" entsprechend der DE 197 390 46 und "TEREF" (blau) entsprechend der EP 0176 935 B1 hergestellt wurde. "Photopisch" und "skotopisch" bezeichnet integrale Reflexionswerte entsprechend der jeweiligen Augenempfindlichkeitskurven gemäß CIE 1951. Die Bezeichnungen A und C symbolisieren die dazugehörigen Lichtarten (nach CIE 1971), HID und LED gewichtete Reflexionswerte, denen Spektren von typischen Entladungslampen und weißen Leuchtdioden der Firma Hella zugrundeliegen. Die Bezeichnungen unter Schichtsystem werden weiter unten erläutert. Rₐ ist der allgemeine Farbwiedergabeindex nach DIN EN 410 und ergibt sich aus der Reflexionskurve. M* ist das größere der beiden Verhältnisse Reflexion(Lichtart A, skotopisch) / Reflexion (Lichtart A, photopisch) und Reflexion(Lichtart C, skotopisch) / Reflexion (Lichtart C, photopisch) und spiegelt die Blendarmut des Spiegels wieder. Liegt der Wert unter 1, ist für beide genormten Lichtarten A und C eine reduzierte Reflexion bei skotopischem Sehen wahrnehmbar. Dieser Wert sollte bei höchstens 97 % liegen.

Wie die Tabelle 1 zeigt, sind die experimentellen Werte bei LED und HID denen von C sehr ähnlich, so dass die weitere Betrachtung anhand der Größen bei C, welche einer allgemein zugänglichen Normierung unterliegen (wie auch A), erfolgen soll.

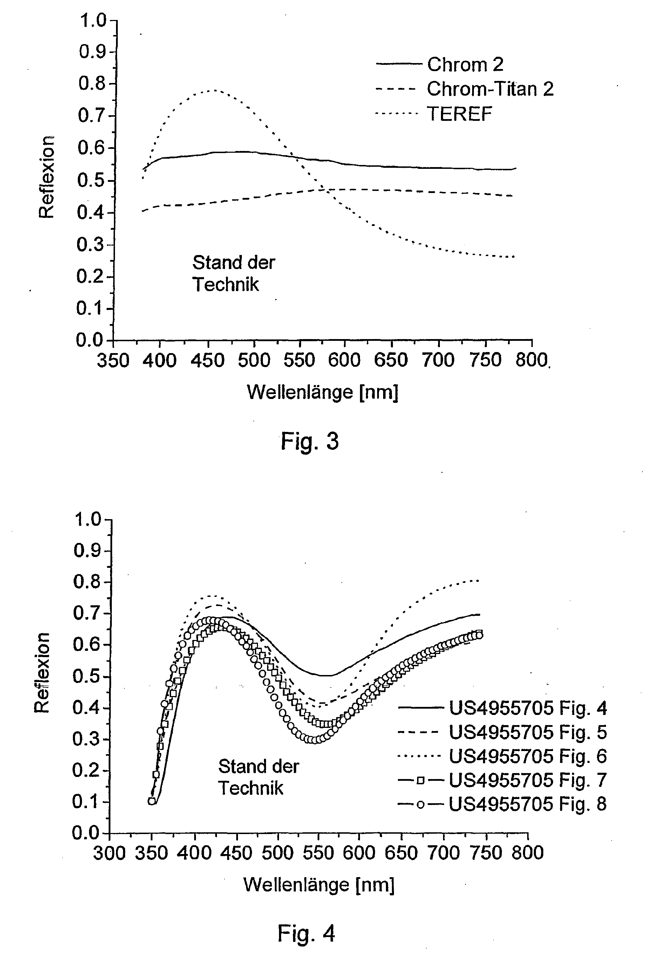

Wie aus der Tabelle 1 ersichtlich, erfüllen die bekannten Systeme das geforderte Kriterium Blendarmut bei ausreichender Farbwiedergabe nicht. So hat der blaue TEREF-Spiegel (Reflexionsspektrum siehe Fig. 3) bei Lichtart C eine Tagreflexion von 53 %, bei Nacht hingegen von 68 %. Eine mögliche und verständliche Erklärung ist, dass der Verlauf der Augenempfindlichkeitskurve zur Folge hat, dass spektrale Reflexionswerte nur in einem engen Bereich zur wahrgenommenen integralen Reflektivität beitragen. Da die Augenempfindlichkeit bei Nachtfahrten in Richtung "blau" verschoben ist, resultiert daraus eine erhöhte integrale Reflektivität. Der ebenfalls zu berücksichtigende Verlauf des Lampenspektrums hat z. B. bei Lichtart A bei kürzereren Wellenlängen zwar eine geringere Beleuchtungsstärke zur Folge, offensichtlich ist dieser Effekt aber untergeordnet. Interessant und überraschend ist in diesem Zusammenhang, dass die Blendarmut solcher blauen Spiegel seit fast zwei Jahrzehnten als anerkannt galt.

### Ausführungsbeispiele:

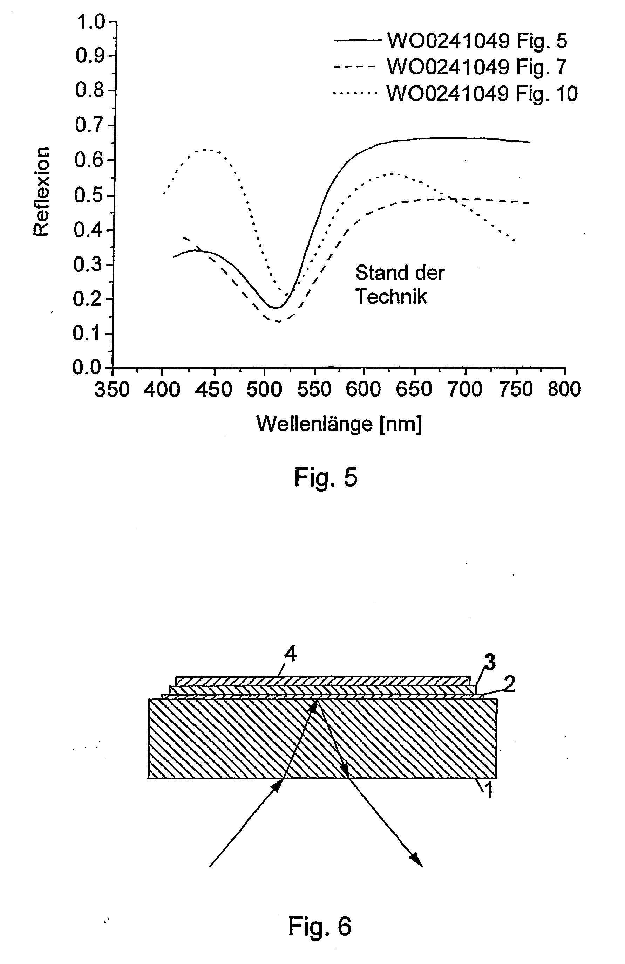

Die in Tabelle 1 genannten Beispiele können z. B. wie folgt als rückseitige Beschichtung eines Glasträgers hergestellt werden (Fig. 6)
1 Glas
2 absorbierende dünne Metallschicht (wenige nm)
3 Dielektrikum
4 Metallreflektor

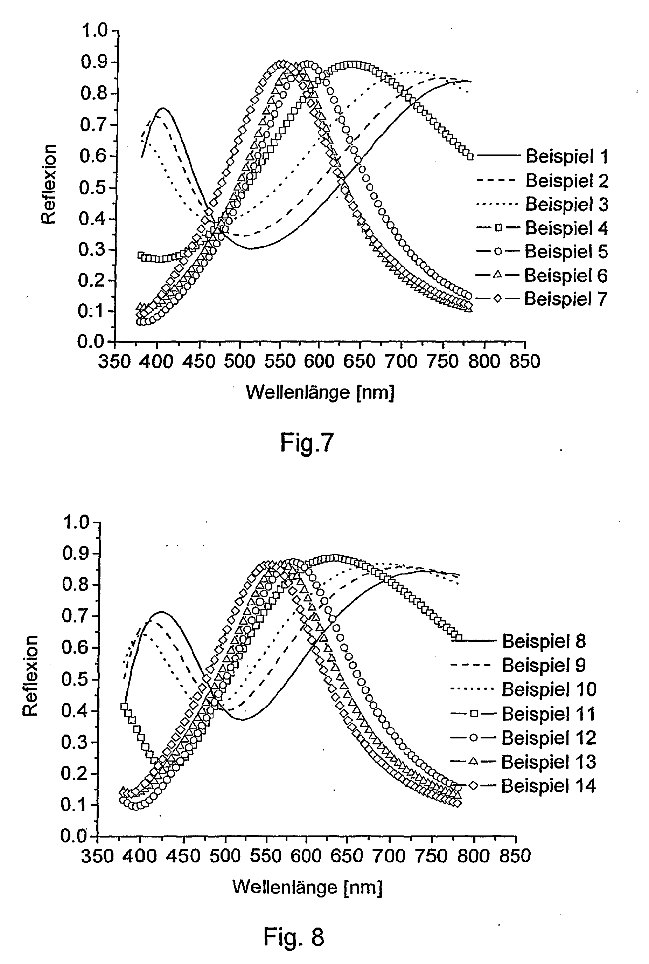

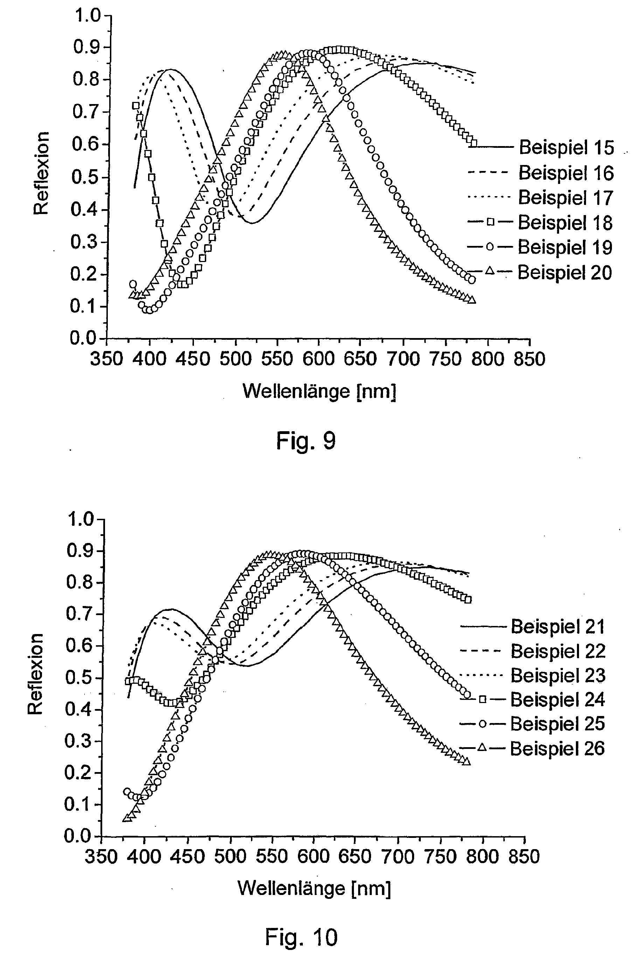

Die oben genannten Beispiele sind bezüglich ihres Schichtaufbaus in Tabelle 1 aufgelistet und die Reflexionsspektren in Fig. 6 bis Fig. 9 dargestellt. Dabei bezeichnet dₛ die jeweilige Schichtdicke der dünnen Metallschicht und der dielektrischen Schicht, dₒ die optische Schichtdicke der dielektrischen Schicht bei einer Wellenlänge von 530 nm (ca. mittig zwischen photopischer und skotopischer Augenempfindlichkeitskurve). Das Dielektrikum 3 kann seinerseits mehrschichtig aufgebaut sein und insbesondere zusätzlich zur eigentlichen dielektrischen Schicht noch eine Zusatzschicht mit im Vergleich geringerer Brechzahl umfassen.

Alle Ausführungsbeispiele weisen für Lichtart A und C Reflexionswerte auf, die beim Übergang vom Tag- zum Nachtsehen um mindestens 3 % abnehmen (d. h. M* kleiner gleich 97 %) und somit als blendarm bezeichnet werden können. Gleichzeitig weisen die Spiegel gemäß den Ausführungsbeispielen akzeptable Rₐ-Werte auf (größer oder gleich 70), während im Stand der Technik diese Werte in Kombination nicht erreicht werden.

Das Schichtsystem kann z. B. mit gängigen Vakuumbeschichtungsverfahren (z.B. Verdampfung, Kathodenzerstäubung, Ionenplattieren) aufgebracht werden. Insbesondere für die dielektrische Schicht sind auch Sol-Gel-Verfahren geeignet.

Geeignete Materialien für die dünne Metallschicht 2 sind u. a. Metalle wie Chrom, Nickel, Eisen, Titan, Silber, Aluminium bzw. deren Legierungen. Dabei werden Nickelchromlegierungen besonders bevorzugt, da sie auch in dünnen Lagen chemisch außerordentlich stabil sind.

Der Reflektor 4 kann z. B. aus typischen Materialien wie Silber, Chrom, Titan, Aluminium, Nickel, Rhodium bzw. deren Legierungen bestehen, in den Ausführungsbeispielen wurde Silber bzw. Chrom gewählt.

Als Schichtträger 1 (Substrat) können neben Kalknatronglas auch andere mineralische und organische Gläser, die die nötige optische Transparenz aufweisen, verwendet werden.

Eine besondere Bedeutung kommt der dielektrischen Schicht 3 zu. Hierzu eignen sich alle transparenten Dielektrika, die sich wirtschaftlich auftragen lassen, so z. B. SiO₂, TiO₂, ZnS, CeO₂, Bi₂O₃, Ta₂O₅. Wie die Beispiele der Tabelle 1 zeigen, soll bei der Bemessung des Schichtsystems darauf geachtet werden, dass die optische Dicke des Dielektrikums in einem Bereich liegt, der zu den gewünschten Eigenschaften führt. Die optische Schichtdicke ergibt sich aus dem Produkt der Dicke und der Brechzahl bei einer bestimmten Wellenlänge. Für die Materialien SiO₂, SnO₂ und TiO₂ beträgt die Brechzahl bei 530 nm 1,46, 1,99 bzw. 2,48. Für niedrigbrechende Materialien wie SiO₂ liegt die erfindungsgemäße optische Dicke gemäß Tabelle 1 zwischen 235 nm und 362 nm, zu höherbrechenden Materialien hin verschiebt sich der Bereich etwas (z. B. TiO₂: 208 nm bis 340 nm). Außerhalb dieser Bereiche wird keine ausreichende Blendarmut bzw. eine unzureichende Farbwiedergabe erreicht. Innerhalb der Dickenintervalle ergeben sich durch Variation Reflexionskurven mit unterschiedlichem Verlauf, die in gewissem Rahmen einen Einfluss auf den Farbton des Spiegels erlauben und somit gestalterischen Zwecken zugänglich sind. Mit den Beispielen 15 bis 20 wurden z. B. die Farben violett, rot, orange, gelb und gelbgrün erzielt.

### Bezugszeichenliste

- 1: Glas
- 2: absorbierende dünne Metallschicht (wenige nm)
- 3: Dielektrikum
- 4: Metallreflektor

## Patentansprüche

1. Blendarmer Rückblickspiegel mit nichtvariablen optischen Eigenschaften für Fahrzeuge, **dadurch gekennzeichnet, dass** das Verhältnis der Reflexionswerte bei für skotopisches Sehen adaptiertem Auge zu den Reflexionswerten für photopisches Sehen bei helladaptiertem Auge, jeweils für die Lichtarten A und C, höchstens 97 % beträgt, dass der Farbwiedergabeindex in Reflexion Rₐ nach DIN EN 410 mindestens 70 beträgt, dass er aus einem transparenten Schichtträger, vorzugsweise aus Kalknatronglas, besteht und mit einer mehrlagigen Beschichtung aus zumindest einem dielektrischen und einem metallischen Material versehen ist, und dass sich die Beschichtung auf der dem Betrachter abgewandten Seite des Schichtträgers befindet und mindestens folgende Schichten umfasst, in der Reihenfolge ihrer Abscheidung,
a) eine transparente Metallschicht
b) eine dielektrische Schicht
c) eine metallische Reflektorschicht.

2. Rückblickspiegel nach Anspruch 1, **dadurch gekennzeichnet, dass** das Verhältnis der Reflexionswerte höchstens 95 %, bevorzugt höchstens 90 %, besonders bevorzugt höchstens 85 %, insbesondere höchstens 80 %, beträgt.

3. Rückblickspiegel nach Anspruch 1 oder 2, **dadurch gekennzeichnet, dass** der Farbwiedergabeindex in Reflexion Rₐ nach DIN EN 410 mindestens 75 beträgt.

4. Rückblickspiegel nach einem der Ansprüche 1 bis 3, **dadurch gekennzeichnet, dass** die transparente Metallschicht aus NiCr besteht und eine Dicke von 1 bis 21 nm aufweist.

5. Rückblickspiegel nach einem der Ansprüche 1 bis 4, **dadurch gekennzeichnet, dass** die dielektrische Schicht aus TiO₂, SiO₂ oder SnO₂ besteht.

6. Rückblickspiegel nach einem der Ansprüche 1 bis 5, **dadurch gekennzeichnet, dass** die optische Dicke do der dieelektrischen Schicht in Abhängigkeit von deren Brechzahl n530 bei einer Wellenlänge von 530 nm derart gewählt ist, dass sie
- für eine Brechzahl n530 von höchstens 1,99 mindestens den durch die im (n530, do)-Raum gegebene, durch die Punkte (n530 = 1,46, do = 235 nm) und (n530 =1,99_{,} do = 216 nm) verlaufende Gerade spezifizierten Wert, bevorzugt mindestens den durch die im (n530, do)-Raum gegebene, durch die Punkte (n530 = 1,46, do = 244 nm) und (n530 =1,99_{,} do = 233 nm) verlaufende Gerade spezifizierten Wert, und höchstens den durch die im (n530, do)-Raum gegebene, durch die Punkte (n530 =1,46, do = 362 nm) und (n530 =1,99, do = 353 nm) verlaufende Gerade spezifizierten Wert, bevorzugt höchstens den durch die im (n530, do)-Raum gegebene, durch die Punkte (n530 =1,46, do = 335 nm) und (n530 = 1,99, do = 330 nm) verlaufende Gerade spezifizierten Wert, und
- für eine Brechzahl n530 von mindestens 1,99 mindestens den durch die im (n530, do)-Raum gegebene, durch die Punkte (n530 = 1,99, do = 216 nm) und (n530 = 2,48, do = 205 nm) verlaufende Gerade spezifizierten Wert, bevorzugt mindestens den durch die im (n530, do)-Raum gegebene, durch die Punkte (n530 = 1,99, do = 233 nm) und (n530 = 2,48, do = 225 nm) verlaufende Gerade spezifizierten Wert, und höchstens den durch die im (n530, do)-Raum gegebene, durch die Punkte (n530 = 1,99, do = 353 nm) und (n530 = 2,48, do = 340 nm) verlaufende Gerade spezifizierten Wert, bevorzugt höchstens den durch die im (n530, do)-Raum gegebene, durch die Punkte (n530 = 1,99, do = 330 nm) und (n530 = 2,48, do = 319 nm) verlaufende Gerade spezifizierten Wert, annimmt.

7. Rückblickspiegel nach einem der Ansprüche 1 bis 6, **dadurch gekennzeichnet, dass** zwischen der Reflektorschicht und der dielektrischen Schicht eine dielektrische Zusatzschicht angeordnet ist.

8. Rückblickspiegel nach Anspruch 7, **dadurch gekennzeichnet, dass** die dielektrische Zusatzschicht eine im Vergleich zur dielektrischen Schicht verringerte Brechzahl aufweist.

9. Rückblickspiegel nach Anspruch 7 oder 8, **dadurch gekennzeichnet, dass** die dielektrische Zusatzschicht aus SiO₂, MgF₂ oder SnO₂ besteht.

10. Rückblickspiegel nach einem der Ansprüche 7 bis 9, **dadurch gekennzeichnet, dass** die Summe der optischen Schichtdicken der dielektrischen Schicht und der Zusatzschicht mindestens 250 nm, vorzugsweise mindestens 275 nm, und höchstens 390 nm, vorzugsweise höchstens 375 nm, beträgt.

11. Rückblickspiegel nach einem der Ansprüche 7 bis 9, **dadurch gekennzeichnet, dass** die Summe der optischen Schichtdicken der dielektrischen Schicht und der Zusatzschicht mindestens 530 nm, vorzugsweise mindestens 560 nm, und höchstens 670 nm, vorzugsweise höchstens 635 nm beträgt.

12. Rückblickspiegel nach einem der Ansprüche 7 bis 11, **dadurch gekennzeichnet, dass** die Reflektorschicht aus Al, Ni, Ti, Cr oder einer Legierung aus diesen Materialien, vorzugsweise aus Cr, gebildet ist.

13. Rückblickspiegel (1) nach einem der Ansprüche 7 bis 12, bei dem der Schichtträger (2) vorderseitig mit einer hydrophilen und/oder photokatalytisch aktiven Beschichtung (7) versehen ist.

## Claims

1. A low-glare rearview mirror with non-variable optical properties for vehicles, **characterized in that** the ratio between the reflection values for an eye adapted for scotopic vision and the reflection values for photopic vision for a light-adapted eye, in each case for illuminants A and C, is maximally 97 % and that a color reproduction index in reflection Rₐ according to DIN EN 410 is at least 70, that it consists of a transparent layer carrier, preferably made of soda-lime glass, and is provided with a multi-layer coating of at least one dielectric and one metallic material, and that the coating is applied on the side of the layer carrier facing away from the viewer and includes at least the following layers, in the order of their deposition:
a) a transparent metallic layer,
b) a dielectric layer,
c) a metallic reflecting layer.

2. The rearview mirror of claim 1, **characterized in that** the ratio between the reflection values is maximally 95 %, preferably maximally 90 %, particularly preferably maximally 85 %, in particular maximally 80 %,

3. The rearview mirror of claim 1 or 2, **characterized in that** the color reproduction index in reflection Rₐ according to DIN EN 410 is at least 75.

4. The rearview mirror of any of claims 1 to 3, **characterized in that** the transparent metallic layer consists of NiCr and has a thickness of 1 to 21 nm.

5. The rearview mirror of any of claims 1 to 4, **characterized in that** the dielectric layer consists of TiO₂, SiO₂ or SnO₂.

6. The rearview mirror of any of claims 1 to 5, **characterized in that** the optical thickness do of the dielectric layer is chosen as a function of the latter's refractive index n530 with a wavelength of 530 nm in such a way that
- for a refractive index n530 of maximally 1.99, its value is at least the value specified through the straight line given in the (n530, do) space and running through the points (n530 = 1.46, do = 235 nm) and (n530 = 1.99, do = 216 nm), preferably at least the value specified through the straight line given in the (n530, do) space and running through the points (n530 = 1.46, do = 244 nm) and (n530 = 1.99, do = 233 nm), and maximally the value specified through the straight line given in the (n530, do) space and running through the points (n530 = 1.48, do = 362 nm) and (n530 = 1.99, do = 353 nm), preferably maximally the value specified through the straight line given in the (n530, do) space and running through the points (n530 = 1.46, do = 335 nm) and (n530 = 1.99, do = 330 nm), and
- for a refractive index n530 of minimally 1.99, its value is at least the value specified through the straight line given in the (n530, do) space and running through the points (n530 = 1.99, do = 216 nm) and (n530 = 2.48, do = 205 nm), preferably at least the value specified through the straight line given in the (n530, do) space and running through the points (n530 = 1.99, do = 233 nm) and (n530 = 2.48, do = 225 nm), and maximally the value specified through the straight line given in the (n530, do) space and running through the points (n530 = 1.99, do = 353 nm) and (n530 = 2.48, do = 340 nm), preferably maximally the value specified through the straight line given in the (n530, do) space and running through the points (n530 = 1.99, do = 330 nm) and (n530 = 2.48, do = 319 nm),

7. The rearview mirror of any of claims 1 to 6, **characterized in that** an additional dielectric layer is arranged between the reflecting layer and the dielectric layer.

8. The rearview mirror of claim 7, **characterized in that** the additional dielectric layer has a lower refractive index than the dielectric layer.

9. The rearview mirror of claim 7 or 8, **characterized in that** the additional dielectric layer consists of SiO₂, MgF₂ or SnO₂,

10. The rearview mirror of any of claims 7 to 9, **characterized in that** the sum of the optical-layer thicknesses of the dielectric layer and the additional layer is at least 250 nm, preferably at least 275 nm, and maximally 390 nm, preferably maximally 375 nm.

11. The rearview mirror of any of claims 7 to 9, **characterized in that** the sum of the optical-layer thicknesses of the dielectric layer and the additional layer is at least 530 nm, preferably at least 560 nm, and maximally 670 nm, preferably maximally 635 nm.

12. The rearview mirror of any of claims 7 to 11, **characterized in that** the reflecting layer consists of Al, Ni, Ti, Cr or of an alloy of these materials, preferably of Cr.

13. The rearview mirror (1) of any of claims 7 to 12, wherein the front side of the layer carrier (2) is provided with a hydrophilic and/or photocatalytically active coating (7).

## Revendications

1. Rétroviseur anti-éblouissement ayant des propriétés optiques non variables pour véhicules, **caractérisé en ce que** le rapport entre les valeurs de réflexion pour l'oeil adapté à la vision scotopique et les valeurs de réflexion pour la vision photopique pour l'oeil adapté à la lumière, à chaque fois pour les illuminants A et C, est au maximum 97 % et qu'un indice de rendu des couleurs en réflexion Rₐ d'après DIN EN 410 est au moins 70, qu'il consiste en un support de couche transparent, qui est de préférence fait de verre de silicate à base de soude et est muni d'un revêtement multicouche d'au moins un matériau diélectrique et un matériau métallique, et que le revêtement se trouve sur le côté du support de couche détourné de l'observateur et comprend au moins les couches suivantes, dans l'ordre de leur précipitation:
a) une couche métallique transparente,
b) une couche diélectrique,
c) une couche métallique réfléchissante.

2. Rétroviseur selon la revendication 1, **caractérisé en ce que** le rapport entre les valeurs de réflexion est au maximum 95 %, de préférence au maximum 90 %, particulièrement de préférence au maximum 85 %, en particulier au maximum 80 %.

3. Rétroviseur selon la revendication 1 ou 2, **caractérisé en ce que** l'indice de rendu des couleurs en réflexion Rₐ d'après DIN EN 410 est au moins 75.

4. Rétroviseur selon l'une quelconque des revendications 1 à 3, **caractérisé en ce que** la couche métallique transparente consiste en NiCr et a une épaisseur de 1 à 21 nm.

5. Rétroviseur selon l'une quelconque des revendications 1 à 4, **caractérisé en ce que** la couche diélectrique consiste en TiO₂, SiO₂ ou SnO₂.

6. Rétroviseur selon l'une quelconque des revendications 1 à 5, **caractérisé en ce que** l'épaisseur optique do de la couche diélectrique est choisie en fonction de l'indice de réfraction n530 de la dernière avec une longueur d'onde de 530 nm de façon que,
- pour un indice de réfraction n530 d'au maximum 1,99, sa valeur est au moins la valeur spécifiée par la ligne droite donnée dans l'espace (n530, do) et passant par les points (n530 = 1,46, do = 235 nm) et (n530 = 1,99, do = 216 nm), de préférence au moins la valeur spécifiée par la ligne droite donnée dans l'espace (n530, do) et passant par les points (n530 = 1,46, do = 244 nm) et (n530 = 1,99, do = 233 nm), et au maximum la valeur spécifiée par la ligne droite donnée dans l'espace (n530, do) et passant par les points (n530 = 1,46, do = 362 nm) et (n530 = 1,88, do = 353 nm), de préférence au maximum la valeur spécifiée par la ligne droite donnée dans l'espace (n530, do) et passant par les points (n530 = 1,46, do = 335 nm) et (n530 = 1,88, do = 330 nm), et
- pour un indice de réfraction n530 d'au minimum 1,99, sa valeur est au moins la valeur spécifiée par la ligne droite donnée dans l'espace (n530, do) et passant par les points (n530 = 1,99, do = 216 nm) et (n530 = 2,48, do = 205 nm), de préférence au moins la valeur spécifiée par la ligne droite donnée dans l'espace (n530, do) et passant par les points (n530 = 1,99, do = 233 nm) et (n530 = 2,48, do = 225 nm), et au maximum la valeur spécifiée par la ligne droite donnée dans l'espace (n530, do) et passant par les points (n530 = 1,99, do = 353 nm) et (n530 = 2,48, do = 340 nm), de préférence au maximum la valeur spécifiée par la ligne droite donnée dans l'espace (n530, do) et passant par les points (n530 = 1,99, do = 330 nm) et (n530 = 2,48, do = 318 nm),

7. Rétroviseur selon l'une quelconque des revendications 1 à 6, **caractérisé en ce qu'**une couche diélectrique additionnelle est disposée entre la couche réfléchissante et la couche diélectrique.

8. Rétroviseur selon la revendication 7, **caractérisé en ce que** la couche diélectrique additionnelle a un indice de réfraction plus bas que la couche diélectrique.

9. Rétroviseur selon la revendication 7 ou 8, **caractérisé en ce que** la couche diélectrique additionnelle consiste en SiO₂, MgF₂ ou SnO₂.

10. Rétroviseur selon l'une quelconque des revendications 7 à 9, **caractérisé en ce que** la somme des épaisseurs de couche optique de la couche diélectrique et de la couche additionnelle est au moins 250 nm, de préférence au moins 275 nm, et au maximum 390 nm, de préférence au maximum 375 nm.

11. Rétroviseur selon l'une quelconque des revendications 7 à 9, **caractérisé en ce que** la somme des épaisseurs de couche optique de la couche diélectrique et de la couche additionnelle est au moins 530 nm, de préférence au moins 560 nm, et au maximum 670 nm, de préférence au maximum 635 nm.

12. Rétroviseur selon l'une quelconque des revendications 7 à 11, **caractérisé en ce que** la couche réfléchissante consiste en Al, Ni, Ti, Cr ou d'un alliage de ces matériaux, de préférence de Cr.

13. Rétroviseur (1) selon l'une quelconque des revendications 7 à 12, dans lequel la face de devant du support de couche (2) est munie d'un revêtement (7) hydrophile et/ou actif photocatalytiquement.
